# EUROPÄISCHE PATENTSCHRIFT

(11) **EP 1 311 918 B1**
(45) Veröffentlichungstag und Bekanntmachung des Hinweises auf die Patenterteilung: **17.03.2004**
(21) Anmeldenummer: 01960166.5
(22) Anmeldetag: 09.08.2001
(51) Int. Cl.: G05B 19/418, G05B 23/02, G06C 1/00

(54) **SYSTEM UND VERFAHREN ZUR AUTOMATISCHEN DATENAUFBEREITUNG INSBESONDERE IM UMFELD PRODUKTION, MONTAGE, SERVICE ODER WARTUNG**
SYSTEM AND METHOD FOR AUTOMATICALLY PROCESSING DATA ESPECIALLY IN THE FIELD OF PRODUCTION, ASSEMBLY, SERVICE OR MAINTENANCE
SYSTEME ET PROCEDE DE PREPARATION AUTOMATIQUE DE DONNEES, EN PARTICULIER DANS LE DOMAINE DE LA PRODUCTION, DU MONTAGE, DU SERVICE OU DE LA MAINTENANCE

(30) Priorität: 22.08.2000 DE 10041102; 03.04.2001 DE 10116539
(43) Veröffentlichungstag der Anmeldung: 21.05.2003
(73) Patentinhaber: SIEMENS AKTIENGESELLSCHAFT, 80333 München (DE)
(72) Erfinder: HAMADOU, Mehdi, 91052 Erlangen (DE); KIESEL, Bruno, 91058 Erlangen (DE); MORITZ, Soeren, 91353 Wimmelbach (DE)
(86) Internationale Anmeldenummer: PCT/DE2001/003050
(87) Internationale Veröffentlichungsnummer: WO 2002/017225

(56) Entgegenhaltungen:
- WO-A-96/03715
- US-A- 6 031 545
- US-A- 6 037 882
- US-A- 6 094 625
- DAUDE R ET AL: "HEAD-MOUNTED DISPLAY ALS FACHARBEITERORIENTIERTE UNTERSTUETZUNGSKOMPONENTE AN CNC-WERKZEUGMASCHINEN" WERKSTATTSTECHNIK, SPRINGER VERLAG. BERLIN, DE, Bd. 86, Nr. 5, 1. Mai 1996 (1996-05-01), Seiten 248-252, XP000585192 ISSN: 0340-4544
- KUZUOKA H: "SPATIAL WORKSPACE COLLABORATION: A SHAREVIEW VIDEO SUPPORT SYSTEM FOR REMOTE COLLABORATION CAPABILITY" STRIKING A BALANCE. MONTEREY, MAY 3 - 7, 1992, PROCEEDINGS OF THE CONFERENCE ON HUMAN FACTORS IN COMPUTING SYSTEMS, READING, ADDISON WESLEY, US, 3. Mai 1992 (1992-05-03), Seiten 533-540, XP000426833

## Beschreibung

System und Verfahren zur automatischen Datenaufbereitung insbesondere im Umfeld Produktion, Montage, Service oder Wartung

Die Erfindung betrifft ein System und ein Verfahren zur automatischen Datenaufbereitung insbesondere im Umfeld Produktion, Montage, Service oder Wartung.

Ein derartiges System und Verfahren kommt beispielsweise im Bereich der Automatisierungstechnik, bei Produktions- und Werkzeugmaschinen, in der Prozessautomatisierung, bei Diagnose-/Serviceunterstützungssystemen sowie für komplexe Komponenten, Geräte und Systeme, wie beispielsweise Fahrzeuge und industrielle Maschinen und Anlagen zum Einsatz. Eine besonders vorteilhafte Anwendung besteht im Zusammenhang mit Augmented Reality (= AR = "erweiterte Realität"), einer neuen Form der Mensch-Technik-Interaktion, bei der dem Anwender Informationen in sein Sichtfeld eingeblendet werden - beispielweise über eine Datenbrille. Die Einblendung geschieht jedoch kontextabhängig, d. h. passend und abgeleitet vom betrachteten Objekt, z. B. einem Bauteil. So wird das reale Sichtfeld beispielweise eines Monteurs durch eingeblendete Montagehinweise um für ihn wichtige Informationen erweitert. In diesem Falle kann Augmented Reality unter anderem das herkömmliche Montagehandbuch ersetzen.

Der hier vorgestellte Lösungsansatz bezieht sich auf den Einsatz von Augmented Reality (AR) in der Montage sowie im Bereich Service und Wartung.

Der Erfindung liegt folgendes Problem zugrunde: Die Komplexität und Vielfalt der Anlagen/Geräte/Systeme (im Folgenden "Produkt" genannt), die ein Facharbeiter meistern muss, wird immer größer. Dieser benötigt in allen Phasen des Lebenszyklus eines Produktes, wie Produktion, Inbetriebsetzung, Wartung und Entsorgung, eine Unterstützung durch umfangreiche Dokumentation wie Handbücher, Montage- und Wartungsanleitungen, technische Zeichnungen, usw. Diese Dokumentation liegt heute meistens in Papierform vor. Sie wird jedoch zunehmend elektronisch angeboten und von einem Datenverarbeitungssystem (DV-System), genannt Server, zentral verwaltet.

Dabei kommt ein breites Spektrum an Geräten (im Folgenden "mobiles DV-System" genannt) zum Einsatz wie WAP-fähige Funktelefone, Notebooks oder sogar am Körper getragene Computer (wearable PC) mit Datenbrillen. Entsprechend ist die Interaktion mit den Dokumenten vielfältig, insbesondere bezüglich der Auflösung und Farbtiefe des Displays, Datenbandbreite und Verfügbarkeit der Netzverbindung und Eingabemöglichkeiten wie Tastatur, Maus, Sprache und Gestik.

Aus EP 0 825 506 ist die Kommunikation zwischen mobilen digitalen Datenverarbeitungsgeräten über ein Netzwerk mit einem Server bekannt. Hierbei haben die mobilen Geräte sogenannte "information clients" , welche die Kommunikation mit dem Server initiieren, vom Server eine ausführbare Anwendung (applet) beziehen und ein geräteunabhängiges virtuelles Maschinenumfeld auf dem mobilen Gerät definieren. Somit können Daten "hardwareunabhängig" dargestellt bzw. an die entsprechenden mobilen Geräte angepasst werden.

Der Erfindung liegt die Aufgabe zugrunde, ein System sowie ein Verfahren anzugeben, das eine an den Anwender und an die verwendete Technik angepasst Aufbereitung der Dokumentationsdaten erlaubt.

Diese Aufgabe wird gelöst durch System zur automatischen Aufbereitung von Dokumentationsdaten von technischen Anlagen und Geräten für Anwender, mit einem Server zur zentralen Verwaltung und Bereitstellung der Dokumentationsdaten, mobilen Datenverarbeitungssystemen zur Anmeldung des Anwenders am Server und zur Visualisierung der Dokumentationsdaten, Erfassungsmitteln zur Erfassung von Anweisungen von Anwendern und einer Datenbank zur Verwaltung von Profilen zu technischen Fähigkeiten der mobilen Datenverarbeitungssysteme, wobei Mittel zur Anpassung der Visualisierung der Dokumentationsdaten an die technischen Fähigkeiten der mobilen Systeme in Abhängigkeit der von der Datenbank verwalteten Profile vorgesehen sind.

Diese Aufgabe wird gelöst durch ein Verfahren zur automatischen Aufbereitung von Dokumentationsdaten von technischen Anlagen und Geräten für Anwender, bei welchem ein Server die Dokumentationsdaten zentral verwaltet und bereitstellt, mobile Datenverarbeitungssysteme zur Anmeldung des Anwenders am Server dienen und die Dokumentationsdaten visualisieren, Erfassungsmittel Anweisungen von Anwendern erfassen und eine Datenbank Profile zu technischen Fähigkeiten der mobilen Datenverarbeitungssysteme verwaltet, wobei die Visualisierung der Dokumentationsdaten in Abhängigkeit der von der Datenbank verwalteten Profile an die technischen Fähigkeiten der mobilen Systeme angepasst wird.

Vorteilhaft lassen sich die Dokumentationsdaten verwalten und bereitstellen, wenn der Server als Webserver ausgebildet ist und Web-Techniken zur Verwaltung und Bereitstellung der Dokumentationsdaten sowie deren Visualisierung auf den mobilen Datenverarbeitungssystemen vorgesehen sind. Das System ist offen für den Einsatz verschiedenster Technologien, so können die mobilen Datenverarbeitungssysteme als WAP-fähige Funktelefone, Notebooks und/oder am Körper getragene Computer mit Datenbrillen ausgebildet sein. Um dem Anwender eine Bedienung des Systems unabhängig von Tastatur und Maus zu ermöglichen, wird vorgeschlagen, Erfassungsmittel zur Erfassung von Anweisungen in Form von Sprache und Gestik einzusetzen. Des Weiteren erweist es sich als vorteilhaft, wenn die Mittel zur Anpassung der Visualisierung der Dokumentationsdaten und zur Anpassung der Erfassung der Anweisungen als regelbasierte Algorithmen ausgebildet sind.

Im Folgenden wird die Erfindung anhand des in der Figur dargestellten Ausführungsbeispiels näher beschrieben und erläutert.

Es zeigt:

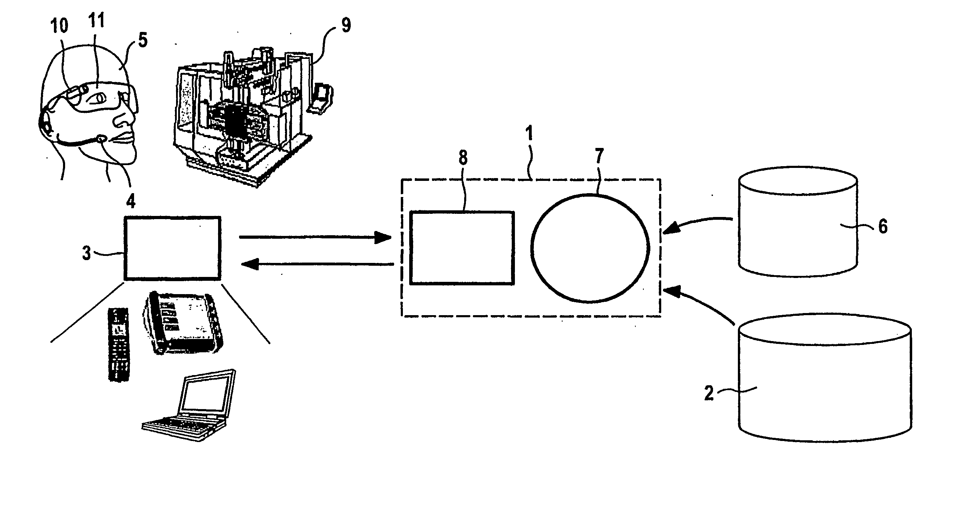

- FIG 1: ein Ausführungsbeispiel für ein System zur automatischen Datenaufbereitung.

Das in Figur 1 beschriebene Ausführungsbeispiel versteht sich insbesondere im speziellen Kontext der Anwendungsfelder "Produktions- und Werkzeugmaschinen" (NC-gesteuerte, automatisierungstechnische Prozesse) sowie "Diagnose-/Serviceunterstützungssysteme für komplexe technische Anlagen/Geräte/Systeme" (z. B. Fahrzeuge, aber auch industrielle Maschinen und Anlagen).

Bei dem in Figur 1 dargestellten Ausführungsbeispiel wird die Dokumentation eines Produktes 9 auf einem zentralen Server 1 abgelegt, so dass sie stets aktuell ist. Dieser Server 1 ist über Web-Techniken erreichbar. Auf diesem Server 1 existiert eine sogenannte Profile-Datenbank 6, wo die Fähigkeiten der mobilen DV-Systeme 3 (HW/SW-Profile) und die Präferenzen der Facharbeiter 5 (User-Profile) verwaltet werden. Die Profile werden benötigt um die Dokumente 2 an die Ein- und Ausgabe und die Fähigkeiten und Präferenzen des Facharbeiters 5 mit Hilfe von Umsetzungsregeln anzupassen. Benötigt der Facharbeiter 5 ein Dokument 2, meldet er sich mit seinem mobilen Gerät 3 beim Server 1 an. Dadurch stellt der Server 1 fest, welche HW/SW- bzw. User-Profile aus der Datenbank 6 für die Datenumsetzung verwendet werden sollen. Teile der Dokumentation 2 werden dem Anwender 5 beispielsweise über eine Datenbrille 11 in sein Sichtfeld eingeblendet. Die Datenbrille 11 enthält neben einer im Bereich der Brillengläser angeordneten Anzeigevorrichtung eine Bilderfassungsvorrichtung 10 in Form einer Kamera sowie ein Mikrofon 4. Der Anwender 5 kann sich mit der Datenbrille 11 im Bereich der Anlage 9 bewegen und Service- oder Wartungsarbeiten durchführen. Das Mikrofon 4 erfasst Anweisungen des Anwenders 5.

Das System weist die im Folgenden genannten Vorteile auf. Die Information wird durch einen sogenannten Datenumsetzer 7 an die Anzeigefähigkeit des mobilen DV-Systems 3 automatisch angepasst. Ebenso passt der Datenumsetzer 7 automatisch die Interaktion (beliebige Kombination von Tastatur, Maus, Sprache und Gestik) an die Fähigkeiten des mobilen DV-Systems 3 an. Das ermöglicht eine Reduzierung der Dokumentgröße/ Bildauflösung bei Netzverbindungen niedriger Datenbandbreite (z. B. Funkverbindung). Die Eigenschaften des mobilen DV-Systems 3 und Präferenzen des Facharbeiters 5 werden in jeweils einer HW/SW-Profil- bzw. User-Profil-Datenbank 6 verwaltet. Die Dokumente der Dokumentation 2 werden dann mit Hilfe von regelbasierten Algorithmen automatisch angepasst. Die gerade benötigte Information wird passend zu den fachlichen Fähigkeiten des Facharbeiters 5 geliefert. Eine transparente Einbettung in einen Web-basierten Ansatz für die Verwaltung und Bereitstellung von Dokumentation 2 zu technischen Anlagen/ Geräten/ Systemen 9 wird ermöglicht. Der Datenumsetzer 7 lässt sich beispielsweise als Java Servlet in jedem beliebigen Webserver 8 einsetzen.

Die folgende Sequenz skizziert ein Ausführungsbeispiel auf Basis der grundlegenden Idee. Gegeben sei ein Störfall in einer Anlage 9 oder sonstigen technischen Einrichtung. Ein Facharbeiter 5 wird für die Beseitigung der Störung bestellt. Der Facharbeiter 5 verwendet sein mobiles DV-System 3 (WAP-Handy, tragbarer Computer, Notebook,..) und meldet sich beim zentralen Webserver 8 an. Der Webserver 8 erkennt anhand der Anmeldeprozedur die Identität des Facharbeiters 5, seine Präferenzen und die Fähigkeiten seines mobilen DV-Systems 3. Der Facharbeiter 5 fordert vom Webserver 8 beispielsweise eine Reparaturanleitung an. Der Webserver holt das angeforderte Dokument aus seiner Datenablage 2. Anhand des in der Profile-Datenbank 6 abgespeicherte Profils wird das Dokument 2 durch den sog. Datenumsetzer 7 angepasst bzw. reduziert. Das angepasste Dokument wird dem Facharbeiter 5 geschickt und auf seinem mobilen DV-System 3 angezeigt bzw. vorgelesen.

Zusammengefasst betrifft die Erfindung somit ein System und ein Verfahren zur automatischen Datenaufbereitung insbesondere im Umfeld Produktion, Montage, Service oder Wartung. Es wird vorgeschlagen, die Dokumentation 2 eines Produktes 9 auf einem zentralen Server 1 abzulegen, so dass sie stets aktuell ist. Dieser Server ist über Web-Techniken erreichbar. Auf diesem Server 1 existiert eine sogenannte Profile-Datenbank 6, wo die Fähigkeiten HW/SW-Profile mobiler DV-Systeme 3 und die Präferenzen User-Profile von Facharbeitern 5 verwaltet werden. Die Profile werden benötigt, um die Dokumente 2 an die Ein- und Ausgabe, Fähigkeiten und Präferenzen des Facharbeiters 5 mit Hilfe von Umsetzungsregeln anzupassen. Benötigt der Facharbeiter 5 ein Dokument 2, meldet er sich mit seinem mobilen Gerät 7 bei dem Server 1 an. Dadurch stellt der Server 1 fest, welche HW/SW- bzw. User-Profile aus der Datenbank 6 für die Datenumsetzung verwendet werden sollen.

## Patentansprüche

1. System zur automatischen Aufbereitung von Dokumentationsdaten von technischen Anlagen und Geräten für Anwender (5), mit
- einem Server (1) zur zentralen Verwaltung und Bereitstellung der Dokumentationsdaten (2),
- mobilen Datenverarbeitungssystemen (3) zur Anmeldung des Anwenders (5) am Server (1) und zur Visualisierung der Dokumentationsdaten (2),
- Erfassungsmitteln (4) zur Erfassung von Anweisungen von Anwendern (5) und
- einer Datenbank (6) zur Verwaltung von Profilen zu technischen Fähigkeiten der mobilen Datenverarbeitungssysteme (3),
wobei Mittel (7) zur Anpassung der Visualisierung der Dokumentationsdaten (2) an die technischen Fähigkeiten der mobilen Systeme in Abhängigkeit der von der Datenbank (6) verwalteten Profile vorgesehen sind.

2. System nach Anspruch 1,
**dadurch gekennzeichnet,**
**dass** die Datenbank (6) zur Verwaltung von Profilen zu Fähigkeiten und Präferenzen der Anwender (5) vorgesehen ist.

3. System nach Anspruch 1 oder 2,
**dadurch gekennzeichnet,**
**dass** der Server (1) als Webserver ausgebildet ist und Web-Techniken (8) zur Verwaltung und Bereitstellung der Dokumentationsdaten (2) sowie deren Visualisierung auf den mobilen Datenverarbeitungssystemen (3) vorgesehen sind.

4. System nach Anspruch 1 bis 3,
**dadurch gekennzeichnet,**
**dass** die mobilen Datenverarbeitungssysteme (3) als WAP-fähige Funktelefone, Notebooks und/oder am Körper getragene Computer mit Datenbrillen ausgebildet sind.

5. System nach einem der vorhergehenden Ansprüche,
**dadurch gekennzeichnet,**
**dass** die Erfassungsmittel (4) zur Erfassung von Anweisungen in Form von Sprache und Gestik vorgesehen sind.

6. System nach einem der vorhergehenden Ansprüche,
**dadurch gekennzeichnet,**
**dass** die Mittel (7) zur Anpassung der Visualisierung der Dokumentationsdaten (2) und zur Anpassung der Erfassung der Anweisungen als regelbasierte Algorithmen ausgebildet sind.

7. Verfahren zur automatischen Aufbereitung von Dokumentationsdaten von technischen Anlagen und Geräten für Anwender (5), bei welchem
- ein Server (1) die Dokumentationsdaten (2) zentral verwaltet und bereitstellt,
- mobile Datenverarbeitungssysteme (3) zur Anmeldung des Anwenders am Server (1) dienen und die Dokumentationsdaten (2) visualisieren,
- Erfassungsmittel (4) Anweisungen von Anwendern (5) erfassen und
- eine Datenbank (6) Profile zu technischen Fähigkeiten der mobilen Datenverarbeitungssysteme (3) verwaltet,
wobei die Visualisierung der Dokumentationsdaten (2) in Abhängigkeit der von der Datenbank (6) verwalteten Profile an die technischen Fähigkeiten der mobilen Systeme angepasst wird.

8. Verfahren nach Anspruch 7,
**dadurch gekennzeichnet,**
**dass** die Datenbank (6) Profile zu Fähigkeiten und Präferenzen der Anwender (5) verwaltet.

9. Verfahren nach Anspruch 7 oder 8,
**dadurch gekennzeichnet,**
**dass** der Server (1) als Webserver ausgebildet ist und die Dokumentationsdaten (2) mit Web-Techniken (8) verwaltet und bereitgestellt werden sowie auf den mobilen Datenverarbeitungssystemen (3) visualisiert werden.

10. Verfahren nach Anspruch 7 bis 9,
**dadurch gekennzeichnet,**
**dass** die mobilen Datenverarbeitungssysteme (3) als WAP-fähige Funktelefone, Notebooks und/oder am Körper getragene Computer mit Datenbrillen ausgebildet sind.

11. Verfahren nach einem der Ansprüche 7 bis 10,
**dadurch gekennzeichnet,**
**dass** Anweisungen in Form von Sprache und Gestik mit Erfassungsmitteln (4) erfasst werden.

12. Verfahren nach einem der Ansprüche 7 bis 11,
**dadurch gekennzeichnet,**
**dass** die Mittel (7) zur Anpassung der Visualisierung der Dokumentationsdaten (2) und zur Anpassung der Erfassung der Anweisungen als regelbasierte Algorithmen ausgebildet sind.

## Claims

1. System for automatic preparation of documentation data of technical systems and devices for users (5), with
- a server (1) for central administration and provision of the documentation data (2),
- mobile data processing systems (3) for logging on the user (5) at server (1) and for visualizing the documentation data (2),
- Means of recording (4) for recording instructions of users (5) and
- a database (6) for administering profiles for technical skills of the mobile data processing systems (3),
with means (7) being provided for adapting the visualization of the documentation data (2) to the technical capabilities of the mobile systems depending on the profiles administered by the database (6).

2. System according to Claim 1,
**characterized in that**,
the database (6) is provided for administering profiles for capabilities and preferences of the users (5).

3. System according to Claim 1 or 2,
**characterized in that**,
the server (1) is designed as a Web server and Web techniques (8) are provided for administration and provision of the documentation data (2) as well as its visualization on the mobile data processing system (3).

4. System according to Claim 1 to 3,
**characterized in that**,
the mobile data processing systems (3) are designed as WAP-enabled radio telephones, notebooks and/or computers worn on the body with data spectacles.

5. System according to one of the previous claims,
**characterized in that**,
the means of recording (4) for recording instructions in the form of voice and gestures are provided.

6. System according to one of the previous claims,
**characterized in that**,
the means (7) for adapting the visualization of the documentation data (2) and for adapting the recording of the instructions are designed as rule-based algorithms.

7. Method for automatic editing of documentation data of technical systems and devices for users. (5), with which
- a server (1) administers and provides the documentation data (2) centrally,
- mobile data processing systems (3) are used to log the user on to the server (1) and to visualize the documentation data (2),
- Means of recording (4) record instructions to users (5) and
- a database (6) administers profiles for technical skills of the mobile data processing systems (3),
whereby the visualization of the documentation data (2) is adapted to the technical capabilities of the system depending on the profiles administered by the database (6).

8. Method according to Claim 7,
**characterized in that**,
the database (6) administers profiles for capabilities and preferences of the users (5).

9. Method according to Claim 7 or 8,
**characterized in that**,
the server (1) is designed as a Web server and the documentation data (2) is administered and provided as well as visualized on the mobile data processing systems (3) using Web techniques (8).

10. Method according to Claim 7 to 9,
**characterized in that**,
the mobile data processing systems (3) are designed as WAP-enabled radio telephones, notebooks and/or computers worn on the body with data spectacles.

11. Method in accordance with one of the Claims 7 to 10,
**characterized in that**,
the instructions are recorded in the form of voice and gestures with recording means (4).

12. Method in accordance with one of the Claims 7 to 11,
**characterized in that**,
the means (7) for adapting the visualization of the documentation data (2) and for adapting the recording of the instructions are designed as rule-based algorithms.

## Revendications

1. Système de préparation automatique de données documentaires d'installations et appareils techniques pour des utilisateurs (5),
- avec un serveur (1) pour gérer centralement et fournir les données documentaires (2),
- avec des systèmes informatiques mobiles (3) pour annoncer l'utilisateur (5) au serveur (1) et pour visualiser les données documentaires (2),
- avec des moyens d'acquisition (4) pour acquérir des instructions des utilisateurs (5), et
- avec une base de données (6) pour gérer des profils de capacités techniques des systèmes informatiques mobiles (3),
des moyens (7) pour adapter la visualisation des données documentaires (2) aux capacités techniques des systèmes mobiles étant prévus en fonction des profils gérés par la base de données (6).

2. Système selon la revendication 1,
**caractérisé par le fait que** la base de données (6) est prévue pour gérer des profils concernant des capacités et des préférences des utilisateurs (5).

3. Système selon la revendication 1 ou 2,
**caractérisé par le fait que** le serveur (1) est conçu comme un serveur web et que des techniques web (8) sont prévues pour gérer et fournir les données documentaires (2) ainsi que pour visualiser celles-ci sur les systèmes informatiques mobiles (3).

4. Système selon l'une des revendications 1 à 3,
**caractérisé par le fait que** les systèmes informatiques mobiles (3) sont conçus comme des téléphones de radiocommunication compatibles avec le WAP, des notebooks et/ou des ordinateurs portés sur le corps avec des lunettes de données.

5. Système selon l'une des revendications précédentes,
**caractérisé par le fait que** les moyens d'acquisition (4) sont prévus pour acquérir des instructions sous la forme de paroles et de gestes.

6. Système selon l'une des revendications précédentes,
**caractérisé par le fait que** les moyens (7) destinés à l'adaptation de la visualisation des données documentaires (2) et à l'adaptation de l'acquisition des instructions sont conçus comme des algorithmes basés sur des règles.

7. Procédé de préparation automatique de données documentaires d'installations et appareils techniques pour des utilisateurs (5), dans lequel
- un serveur (1) gère centralement et fournit les données documentaires (2),
- des systèmes informatiques mobiles (3) servent à annoncer l'utilisateur au serveur (1) et visualisent les données documentaires (2),
- des moyens d'acquisition (4) acquièrent des instructions des utilisateurs (5), et
- une base de données (6) gère des profils correspondant à des capacités techniques des systèmes informatiques mobiles (3),
la visualisation des données documentaires (2) en fonction des profils gérés par la base de données (6) étant adaptée aux capacités techniques des systèmes mobiles.

8. Procédé selon la revendication 7,
**caractérisé par le fait que** la base de données (6) gère des profils concernant des capacités et des préférences des utilisateurs (5).

9. Procédé selon la revendication 7 ou 8,
**caractérisé par le fait que** le serveur (1) est conçu comme un serveur web et que les données documentaires (2) sont gérées et fournies par des techniques web (8) et sont visualisées sur les systèmes informatiques mobiles (3).

10. Procédé selon les revendications 7 à 9,
**caractérisé par le fait que** les systèmes informatiques mobiles (3) sont conçus comme des téléphones de radiocommunication compatibles avec le WAP, des notebooks et/ou des ordinateurs portés sur le corps avec des lunettes de données.

11. Procédé selon l'une des revendications 7 à 10,
**caractérisé par le fait que** des instructions sont acquises sous la forme de paroles et de gestes par des moyens d'acquisition (4).

12. Procédé selon l'une des revendications 7 à 11,
**caractérisé par le fait que** les moyens (7) destinés à l'adaptation de la visualisation des données documentaires (2) et à l'adaptation de l'acquisition des instructions sont conçus comme des algorithmes basés sur des règles.
